# EUROPÄISCHE PATENTSCHRIFT

(11) **EP 3 772 933 B1**
(45) Veröffentlichungstag und Bekanntmachung des Hinweises auf die Patenterteilung: **04.05.2022**
(21) Anmeldenummer: 19722862.0
(22) Anmeldetag: 06.05.2019
(51) Int. Cl.: A01M 29/12, A01M 29/16, A01M 29/18

(54) **INSEKTENABWEHRVORRICHTUNG**
DEVICE FOR REPELLING INSECTS
DISPOSITIF POUR REPOUSSER LES INSECTES

(30) Priorität: 14.06.2018 DE 102018114260
(43) Veröffentlichungstag der Anmeldung: 17.02.2021
(73) Patentinhaber: MACO Technologie GmbH, 5020 Salzburg (AT)
(72) Erfinder: HABERSATTER, Mathias, 5050 Radstadt (AT)
(74) Vertreter: Manitz Finsterwald Patent- und Rechtsanwaltspartnerschaft mbB
(86) Internationale Anmeldenummer: PCT/EP2019/061527
(87) Internationale Veröffentlichungsnummer: WO 2019/238313

(56) Entgegenhaltungen:
- CN-A- 108 035 661
- GB-A- 2 499 588
- KR-A- 20150 015 969
- US-A- 2 629 628
- US-A1- 2009 260 393

## Beschreibung

Die vorliegende Erfindung betrifft eine Insektenabwehrvorrichtung mit einer in einem Gehäuse befindlichen Schall- und/oder Duft-erzeugenden Emissions-Einheit.

Derartige Insektenabwehrvorrichtungen sind allgemein bekannt und basieren auf der Erkenntnis, dass Insekten beispielsweise Ultraschall-Wellen sowie bestimmte Düfte oder Chemikalien als unangenehm empfinden und daher Bereiche meiden, die derartigen Emissionen ausgesetzt sind. Herkömmliche Insektenabwehrvorrichtungen können zur Erzeugung von Ultraschall-Wellen, Düften oder anderen Emissionen eine elektrische Emissions-Einheit aufweisen, die entsprechende Emissionen erzeugt, wenn sie bestromt wird. Beispielsweise kann an dem Gehäuse solch einer Insektenabwehrvorrichtung ein Stecker mit entsprechenden Kontakten angeformt sein, so dass die Insektenabwehrvorrichtung direkt in eine herkömmliche Haushaltssteckdose gesteckt werden kann.

Aus der CN 108035661 A ist eine entsprechende Ultraschall-Insektenabwehrvorrichtung bekannt, die an einem Fensterflügel angebracht ist und manuell geregelt wird.

Gleichermaßen sind rein passive Insektenabwehrvorrichtungen bekannt, z.B. aus der US2009/0260393 A1, die ohne

Zufuhr elektrischer Energie Duftstoffe absondern, die von Insekten als unangenehm empfunden und daher gemieden werden.

Der effektive Wirkbereich derartiger Insektenabwehrvorrichtungen ist jedoch in aller Regel sehr begrenzt, was zur Folge haben kann, dass sich Insekten von solch einer Insektenabwehrvorrichtung nicht daran hindern lassen, durch ein nicht im Wirkbereich der Insektenabwehrvorrichtung befindliches Fenster beispielsweise in einen Schlafraum einzudringen. Eine in dem Schlafraum befindliche Person kann somit unter Umständen im Schlaf durch in den Schlafraum gelangte Insekten gestört und gegebenenfalls sogar gestochen oder gebissen werden, obwohl genau dies durch die Insektenabwehrvorrichtung unterbunden werden soll.

Der Erfindung liegt daher die Aufgabe zugrunde, zuverlässig dafür zu sorgen, dass Insekten einen mittels einer Insektenabwehrvorrichtung zu schützenden Raum tatsächlich meiden.

Diese Aufgabe wird mit einer Insektenabwehrvorrichtung mit den Merkmalen des Anspruchs 1 gelöst.

Die Gehäuseabmessungen des Gehäuses der Insektenabwehrvorrichtung sind so gewählt, dass die Insektenabwehrvorrichtung in der Falzluft zwischen einem Blendrahmen und einem Tür- bzw. Fensterflügel montiert werden kann, der bezüglich dem Blendrahmen verschwenkt, gekippt oder verschoben werden kann. Die Insektenabwehrvorrichtung kann somit direkt in einem Fenster oder einer Tür - hier nachfolgend auch als Zugangsvorrichtung bezeichnet - angeordnet werden, durch die möglicherweise Insekten von außen in einen Raum gelangen können. Das Fenster bzw. die Tür befindet sich somit vollständig und unmittelbar im Wirkbereich der Insektenabwehrvorrichtung, so dass Insekten selbst bei geöffnetem Fenster oder Tür bei eingeschaltetem Licht in dem Raum davon Abstand nehmen, sich dem offenen Fenster bzw. der Tür zu nähern, geschweige denn, durch den Blendrahmen in den Raum zu gelangen. Das Fenster bzw. die Tür wird somit gewissermaßen von einer Emissionsschranke umgeben bzw. in eine Emissionswolke eingehüllt, durch die verhindert wird, dass Insekten die Zugangsvorrichtung passieren können.

Aufgrund der Tatsache, dass das Gehäuse der Insektenabwehrvorrichtung in die Falzluft der Zugangsvorrichtung passt, kann der Flügel der Zugangsvorrichtung geöffnet und geschlossen werden ohne hierbei mit der Insektenabwehrvorrichtung bzw. dessen Gehäuse zu kollidieren. Die Insektenabwehrvorrichtung kann somit dauerhaft in der Falzluft montiert werden und unverzüglich seine schützende Wirkung entfalten, sobald die Tür bzw. das Fenster geöffnet wird.

Erfindungsgemäß umfasst die Insektenabwehrvorrichtung ein Betätigungselement zur Aktivierung der Emissions-Einheit, wobei das Betätigungselement eine erste Stellung aufweist, in der die Insektenabwehrvorrichtung keine Emissionen emittiert, und eine zweite Stellung aufweist, in der die Insektenabwehrvorrichtung von der Emissions-Einheit erzeugte Emissionen emittiert. Mit anderen Worten kann also die Insektenabwehrvorrichtung mittels des Betätigungselements gewissermaßen ein- und ausgeschaltet werden. Ist beispielsweise ein mittels der Insektenabwehrvorrichtung zu schützendes Fenster geschlossen, so kann die Insektenabwehrvorrichtung vor dem Schließen des Fensters deaktiviert bzw. ausgeschaltet werden, da bei geschlossenem Fenster ohnehin keine Insekten durch das Fenster hindurch gelangen können. Durch die Deaktivierung der Insektenabwehrvorrichtung kann dabei erreicht werden, dass beispielsweise bei einer duftbasierten Emissions-Einheit dieselbe keine Duftstoffe mehr absondern kann, was andernfalls zu einem frühzeitigen Erschöpfen der Emission-Einheit bzw. deren Duft-Kartusche führen kann. Wird hingegen das Fenster wieder geöffnet, kann die Insektenabwehrvorrichtung bzw. deren Emissions-Einheit mittels des Betätigungselements wieder aktiviert werden, um so das nun geöffnete Fenster zu schützen.

Zwar ist es grundsätzlich möglich, das Betätigungselement zur Aktivierung der Emissions-Einheit manuell zu bedienen; gemäß der Erfindung ist es jedoch vorgesehen, dass das Betätigungselement zur Aktivierung der Emissions-Einheit im in die Falzluft eingebauten Zustand der Insektenabwehrvorrichtung derart orientiert ist, dass der Flügel der Zugangsvorrichtung das Betätigungselement aus seiner zweiten Stellung in seine erste Stellung beim Schließen der Zugangsvorrichtung überführt. Das Betätigungselement ist also erfindungsgemäß an dem Gehäuse der Insektenabwehrvorrichtung platziert, so dass es sich in der Bewegungsbahn des Flügels der Zugangsvorrichtung befindet. Der Flügel der Zugangsvorrichtung kollidiert somit zwangsweise mit dem Betätigungselement, wenn die Zugangsvorrichtung bzw. dessen Flügel geschlossen wird. Dadurch, dass das Betätigungselement somit beim Schließen des Flügels von seiner zweiten Stellung in seine erste Stellung überführt wird, wird somit die Insektenabwehrvorrichtung beim Schließen der Zugangsvorrichtung automatisch deaktiviert.

Im Folgenden wird nun auf bevorzugte Ausführungsformen der Erfindung eingegangen. Weitere Ausführungsformen können sich aus den abhängigen Ansprüchen, der Figurenbeschreibung sowie den Zeichnungen ergeben.

Damit das Gehäuse der Insektenabwehrvorrichtung in die Falzluft passt, kann es gemäß einer Ausführungsform zumindest in einer Richtung betrachtet eine Außenabmessung aufweisen, die kleiner als die Abmessung der Falzluft zwischen einem Blendrahmen und einem Flügel und insbesondere kleiner als 12 mm, vorzugsweise kleiner als 9 mm, ist. Wenn daher das Gehäuse eine Außenabmessung aufweist, die kleiner als 12 mm ist, so wird hierdurch sichergestellt, dass die erfindungsgemäße Insektenabwehrvorrichtung in der Falzluft handelsüblicher und genormter Fenster oder Türen montiert werden kann, ohne mit dem Flügel der jeweiligen Zugangsvorrichtung zu kollidieren.

Gemäß einer weiteren Ausführungsform kann es sich bei dem Betätigungselement um einen in Richtung seiner zweiten Stellung federvorgespannten Taster handeln, welcher derart orientiert ist, dass das Federelement, durch das der Taster in Richtung seiner zweiten Stellung vorgespannt wird, beim Öffnen der Zugangsvorrichtung entlastet wird. Wurde der Taster also beim Schließen der Zugangsvorrichtung durch den Flügel aus seiner zweiten Stellung in seine erste Stellung überführt, so wird das als Taster ausgeführte Betätigungselement bei einem nachfolgenden Öffnen der Zugangsvorrichtung durch die Feder wieder automatisch in seine zweite Stellung überführt und somit die Insektenabwehrvorrichtung wieder automatisch aktiviert.

Gemäß einer weiteren Ausführungsform kann mit dem Betätigungselement eine Verschlussvorrichtung antriebswirksam gekoppelt sein, durch die eine Emissionsöffnung in dem Gehäuse selektiv verschlossen werden kann. Auf diese Weise kann beispielsweise bei einer rein passiven, duftbasierten Insektenabwehrvorrichtung die Duft-Kartusche bzw. das Duft-Depot nach außen hin verschlossen werden, so dass dieses keine Duftaromen mehr absondern kann, wie dies beispielsweise bei geschlossenem Fenster zur Verlängerung der Haltbarkeit der Duft- Kartusche wünschenswert sein kann.

Gemäß einer weiteren Ausführungsform kann das Gehäuse eine Öffnung, insbesondere eine verschließbare Öffnung aufweisen, durch die eine Emissions-Einheit oder eine Duft-Kartusche in das Gehäuse eingesetzt werden kann. Ist also eine beispielsweise duftbasierte Emissions-Einheit bzw. eine Duft-Kartusche erschöpft, so kann diese durch die Öffnung entnommen und eine neue Kartusche eingesetzt werden.

Gemäß einer weiteren Ausführungsform kann die Insektenabwehrvorrichtung eine Batterie, insbesondere eine wiederaufladbare Batterie, und/oder einen Stromanschluss zur Bestromung einer von dem Gehäuse aufgenommenen Emissions-Einheit umfassen. So kann die Emissions-Einheit beispielsweise einen Ultraschallgenerator umfassen, der auf diese Weise mit Strom versorgt werden kann. Zusätzlich oder alternativ hierzu kann die Emissions-Einheit beispielsweise eine Heizung umfassen, mittels derer eine Duft-Kartusche zur effektiven Absonderung von Duftaromen beheizt werden kann.

Um die Insektenabwehrvorrichtung zuverlässig in der Falzluft einer Zugangsvorrichtung befestigen zu können, kann das Gehäuse eine ebene Fläche ausbilden, die normal zu jener Richtung orientiert ist, in der das Gehäuse eine Außenabmessung aufweist, die kleiner als die Falzluft ist. Das Gehäuse lässt sich somit über die in Rede stehende ebene Fläche beispielsweise an der Innenfläche eines Blendrahmens anbringen. Beispielsweise kann an der ebenen Fläche ein doppelseitiges Klebeband vorgesehen sein oder werden, über das das Gehäuse der Insektenabwehrvorrichtung flächig an die Innenfläche des Blendrahmens geklebt werden kann.

Gemäß einer weiteren Ausführungsform kann von dem Gehäuse zumindest ein mit der ebenen Gehäusefläche flächenbündiger Befestigungsflansch abstehen, der eine Durchgangsöffnung zur Aufnahme eine Schraube für die Befestigung des Gehäuses an einem Blendrahmen oder an einem Flügel einer Zugangsvorrichtung aufweist. Die Insektenabwehrvorrichtung kann somit zusätzlich oder alternativ zu einer Klebebefestigung mit beispielsweise einem Blendrahmen verschraubt werden.

Im Folgenden wird die Erfindung nun rein exemplarisch unter Bezugnahme auf die Zeichnungen beschrieben, in denen:
- Fig. 1: eine perspektivische Darstellung einer erfindungsgemäßen Insektenabwehrvorrichtung zeigt;
- Fig. 2: zwei an einem Blendrahmen einer Zugangsvorrichtung mon2tierte Insektenabwehrvorrichtungen in perspektivischer Darstellung mit teilweise weggebrochenem Flügel zeigt; und
- Fig. 3: einen Schnitt durch die Zugangsvorrichtung der Fig. 2 mit Ansicht auf deren linke Insektenabwehrvorrichtung zeigt.

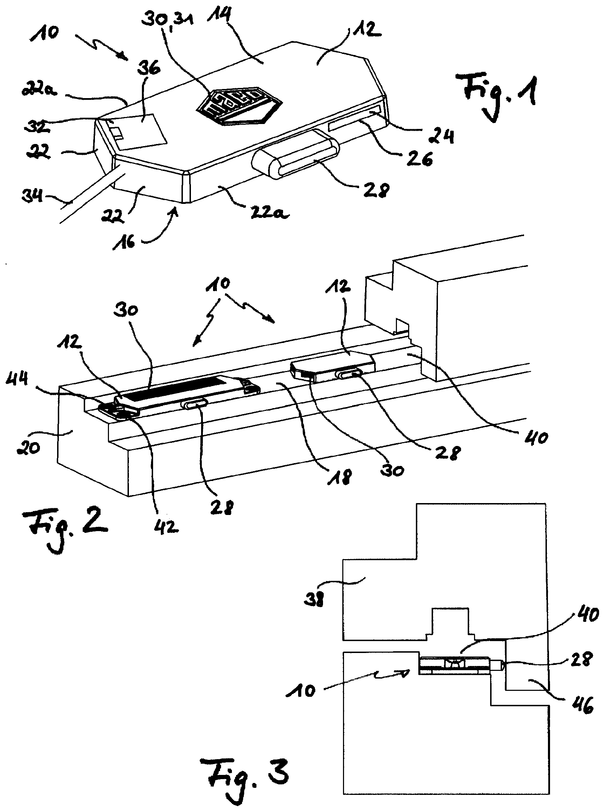

Die Fig. 1 zeigt in perspektivischer Darstellung eine erfindungsgemäße Insektenabwehrvorrichtung 10, welche erfindungsgemäß speziell zur Aufnahme in der Falzluft eines Fensters oder einer Tür ausgebildet ist. Wie der Fig. 1 ohne Weiteres entnommen werden kann, weist die Insektenabwehrvorrichtung 10 ein Gehäuse 12 auf, das sich durch eine geringe Bauhöhe auszeichnet und somit verhältnismäßig flach ausgebildet ist, um in die Falzluft beispielsweise eines Fensters zu passen.

In der Draufsicht betrachtet besitzt das Gehäuse 12 eine hexagonale Gestalt mit einer hexagonalen Oberfläche 14, die hier mit einem Herstellerlogo 31 versehen ist. An der der Oberfläche 14 abgewandten Seite besitzt das Gehäuse 12 eine mit der Oberfläche 14 im Wesentlichen flächengleiche ebene Montagefläche 16, über die das Gehäuse 12 an einer Innenfläche 18 eines Blendrahmens 20 angebracht werden kann, wie dies nachfolgend unter Bezugnahme auf die Fig. 2 und 3 noch genauer erläutert wird. Die Oberfläche 14 und die Montagefläche 16 sind durch im Wesentlichen senkrecht dazu ausgerichtete Seitenflächen 22 miteinander verbunden, so dass das Gehäuse 12 im Wesentlichen eine prismatische Gestalt bzw. die Gestalt eines Prismas besitzt. Das Gehäuse 12 weist zwei parallel zueinander ausgerichtete Seitenflächen 22a auf, die etwa doppelt so lang sind wie der Abstand zwischen diesen Seitenflächen 22a.

Die Höhenabmessung des Gehäuses 12 bzw. der Abstand zwischen der Oberfläche 14 und der Montagefläche 16 ist hingegen deutlich kleiner und beträgt insbesondere weniger als 12 mm, vorzugsweise weniger als 9 mm, damit die Insektenabwehrvorrichtung 10 bzw. das Gehäuse 12 von der Falzluft beispielsweise eines Fensters aufgenommen werden kann.

Das Gehäuse 12 dient zur Aufnahme einer hier nicht genauer erkennbaren Schall- und/oder Duft-erzeugenden Emissions-Einheit 24, welche durch eine Öffnung 26 in der vorderen Seitenfläche 22a in das Innere des Gehäuses 12 eingeschoben werden kann.

Neben der Öffnung 26 weist die Insektenabwehrvorrichtung 10 in der Mitte der vorderen Seitenfläche 22a ein davon abstehendes Betätigungselement 28 in Form eines nicht-rastenden Tasters auf, über den die Insektenabwehrvorrichtung 10 bzw. deren Emissions-Einheit 24 aktiviert und deaktiviert werden kann. In der Fig. 1 steht das Betätigungselement 28 von der Seitenfläche 22a nach vorne ab, wobei es ausgehend aus dieser Stellung, die hier als "zweite" Stellung bezeichnet wird, entgegen der Vorspannwirkung einer hier nicht dargestellten Feder ins Innere des Gehäuses 12 gedrückt werden kann, wobei diese Stellung hier auch als erste Stellung des Betätigungselements 28 bezeichnet wird. Wie bereits erwähnt, lässt sich mittels des Betätigungselements 28 die Insektenabwehrvorrichtung 10 bzw. deren Emissions-Einheit selektiv aktivieren, so dass die Insektenabwehrvorrichtung 10 in der ersten Stellung des Betätigungselements 28 keine Emissionen emittiert, wohingegen die Emissions-Einheit 24 in der zweiten Stellung des Betätigungselements 28 Emissionen wie beispielsweise Schall, Geräusche, Duftstoffe und/oder Chemikalien emittiert.

Handelt es sich beispielsweise bei der Insektenabwehrvorrichtung 10 um eine Insektenabwehrvorrichtung 10 mit einer passiven Emissions-Einheit 24, die ein Duft-Depot oder eine Duft-Kartusche umfasst, die im Wesentlichen unabhängig von äußeren Randbedingungen Duftstoffe absondert, so kann das Betätigungselement 28 beispielsweise mit einer hier nicht genauer dargestellten Verschlussvorrichtung antriebswirksam gekoppelt sein, durch die eine Emissionsöffnung 30 in dem Gehäuse selektiv geöffnet und verschlossen werden kann.

Bei der in der Fig. 1 dargestellten Ausführungsform kann diese Emissionsöffnung 30 beispielsweise durch die vertieften Abschnitte des dargestellten Herstellerlogos 31 gebildet werden, so dass durch diese Emissionsöffnung 30 Duftstoffe, die die Emissions-Einheit 24 im Inneren des Gehäuses 12 absondert, nach außen gelangen können, um so die gewünschte Schutz- bzw. Abwehrwirkung gegen Insekten entfalten zu können. Besteht hingegen kein Bedarf nach einer Insektenabwehr, kann das Betätigungselement 28 in seine erste Stellung gedrückt werden, um die Emissionsöffnung 30 zu verschließen.

Alternativ oder zusätzlich zu der duftbasierten Emissions-Einheit 24 kann die erfindungsgemäße Insektenabwehrvorrichtung 10 ferner eine hier nicht erkennbare ultraschallbasierte Emissions-Einheit umfassen, deren Ultraschallgenerator über ein Kabel 34 und/oder eine Batterie bestromt werden kann, die sich in einem Batteriefach 32 befindet, das ausgehend von der Oberfläche 14 des Gehäuses 12 zugänglich ist und durch einen Deckel 36 verschlossen ist.

Im Folgenden wird nun unter Bezugnahme auf die Fig. 2 und 3 auf die Montage der Insektenabwehrvorrichtung 10 sowie deren Funktionsweise genauer eingegangen. Wie diesen Figuren entnommen werden kann, befinden sich dort die beiden Insektenabwehrvorrichtungen 10 mit ihrer jeweiligen Montagefläche 16 vollflächig mit einer Innenfläche 18 eines Blendrahmens 20 in Anlage, die dem Flügel 38 des Fensters zugewandt ist. Wie dabei insbesondere der Fig. 3 entnommen werden kann, die das Fenster in der geschlossenen Stellung zeigt, befinden sich die Insektenabwehrvorrichtungen 10 in der Falzluft 40 zwischen dem Blendrahmen 20 und dem Flügel 38. Dementsprechend weist das Gehäuse 12 der Insektenabwehrvorrichtungen 10 eine Höhenabmessung auf, die etwas geringer ist als die Falzluft 40, um so in der gewünschten Weise in die Falzluft 40 zu passen.

Die in der Fig. 2 rechts dargestellte Insektenabwehrvorrichtung 10 ist mit der Innenfläche 18 des Blendrahmens 20 verklebt, beispielsweise über ein werkseitig an der Montagefläche 16 angebrachtes doppelseitiges Klebeband. Die links dargestellte Insektenabwehrvorrichtung 10 weist hingegen zwei Befestigungsflansche 42 auf, die von dem Gehäuse 12 abstehen und flächenbündig mit der Montagefläche 16 sind, so dass das Gehäuse 12 mit Hilfe von Schrauben 44 an der Innenfläche 18 des Blendrahmens 20 festgeschraubt werden kann, indem die Schrauben 44 durch in den Befestigungsflanschen 42 ausgebildete Durchgangsöffnungen in den Blendrahmen 20 geschraubt werden.

Wird nun der Flügel 38 des Fensters ausgehend aus der in den Fig. 2 und 3 dargestellten geschlossenen Stellung aufgeschwenkt oder gekippt, so entfernt sich der untere Falz 46 des Flügels 38 von der Insektenabwehrvorrichtung 10 und insbesondere von dem Betätigungselement 28 mit der Folge, dass dieses ausgehend aus der in der Fig. 3 dargestellten ersten Stellung durch die bereits zuvor erwähnte Vorspannfeder in seine zweite Stellung gedrückt wird, woraufhin die Insektenabwehrvorrichtung 10 Emissionen in Form von Schall und/oder Duft durch die Emissionsöffnungen 30 abgeben kann, die bei der rechten Insektenabwehrvorrichtungen 10 in deren Seitenflächen 22 und bei der linken Insektenabwehrvorrichtungen 10 in deren Oberfläche 14 ausgebildet sind. Bei geöffnetem Fenster hüllen die Insektenabwehrvorrichtungen 10 somit das Fenster gewissermaßen in eine Art Schutzwolke ein, durch die verhindert werden kann, dass Insekten durch das geöffnete Fenster gelangen können.

Wird der Fensterflügel 38 hingegen wieder geschlossen, so gelangt hierbei der untere Flügelfalz 46 wieder mit dem Betätigungselement 28 in Anlage und drückt dieses ausgehend aus seiner zweiten Stellung in seine erste Stellung zurück, in der die Insektenabwehrvorrichtungen 10 keine Emissionen mehr abgeben können. Bei geschlossenem Fenster werden die Insektenabwehrvorrichtungen 10 somit automatisch deaktiviert, wodurch in der gewünschten Weise erreicht werden kann, dass beispielsweise duftbasierte Emissions-Einheiten nicht ausdampfen können, wodurch deren Lebensdauer verlängert wird.

Entgegen der dargestellten Ausführungsform, kann die Insektenabwehrvorrichtung 10 über ihre Montagefläche 16 beispielsweise jedoch auch an der Innenseite eines Blendrahmens eines Fensters angebracht werden, die dem Raum zugewandt ist. Die Insektenabwehrvorrichtung 10 kann sich dabei direkt unterhalb des den Blendrahmen teilweise überdenkenden Überschlags des Fensters befinden, so dass das Betätigungselement 28 durch die Unterkante des Überschlags betätigt oder freigegeben werden kann, wenn das Fenster geöffnet bzw. geschlossen wird.

### Bezugszeichenliste

- 10: Insektenabwehrvorrichtung
- 12: Gehäuse
- 14: Oberfläche
- 16: Montagefläche
- 18: Innenfläche von 20
- 20: Blendrahmen
- 22, 22a: Seitenflächen
- 24: Emissions-Einheit
- 26: Öffnung
- 28: Betätigungselement/Taster
- 30: Emissionsöffnung
- 31: Herstellerlogo
- 32: Batteriefach
- 34: Kabel
- 36: Deckel
- 38: Flügel
- 40: Falzluft
- 42: Befestigungsflansch
- 44: Schraube
- 46: unterer Flügelfalz

## Patentansprüche

1. Insektenabwehrvorrichtung (10) mit einem Gehäuse (12) zur Aufnahme einer Schall- und/oder Duft-erzeugenden Emissions-Einheit (24),
wobei das Gehäuse (12) derart ausgestaltet ist, dass es in die Falzluft (40) eines geschlossenen Fensters oder einer geschlossenen Tür passt;
**dadurch gekennzeichnet, dass**
die Insektenabwehrvorrichtung (10) ein Betätigungselement (28) zur Aktivierung der Emissions-Einheit (24) umfasst, wobei das Betätigungselement (28) an dem Gehäuse (12) platziert ist und eine erste Stellung aufweist, in der die Insektenabwehrvorrichtung (10) keine Emissionen emittiert, und eine zweite Stellung aufweist, in der die Insektenabwehrvorrichtung (10) von der Emissions-Einheit (24) erzeugte Emissionen emittiert.

2. Insektenabwehrvorrichtung nach Anspruch 1,
**dadurch gekennzeichnet, dass**
das Gehäuse (12) zumindest in einer Richtung betrachtet eine Außenabmessung aufweist, die kleiner als die Abmessung der Falzluft (40) zwischen einem Blendrahmen (20) und einem Flügel (38) und insbesondere kleiner als 12 mm, vorzugsweise kleiner als 9 mm, ist.

3. Insektenabwehrvorrichtung nach Anspruch 1,
**dadurch gekennzeichnet, dass** das Betätigungselement (28) ein in Richtung seiner zweiten Stellung federvorgespannter Taster ist, der insbesondere keine Raststellung aufweist.

4. Insektenabwehrvorrichtung nach zumindest einem der vorstehenden Ansprüche,
**dadurch gekennzeichnet, dass** mit dem Betätigungselement (28) eine Verschlussvorrichtung antriebwirksam gekoppelt ist, durch die eine Emissionsöffnung (30) in dem Gehäuse (12) selektiv verschließbar ist.

5. Insektenabwehrvorrichtung nach zumindest einem der vorstehenden Ansprüche,
**dadurch gekennzeichnet, dass** das Gehäuse (12) eine Öffnung (26), insbesondere eine verschließbare Öffnung (26), aufweist, durch die eine Emissions-Einheit (24) in das Gehäuse (12) einbringbar ist.

6. Insektenabwehrvorrichtung nach zumindest einem der vorstehenden Ansprüche,
**dadurch gekennzeichnet, dass**
die Insektenabwehrvorrichtung (10) eine Batterie, insbesondere eine wiederaufladbare Batterie, und/oder einen Stromanschluss (34) zur Bestromung einer von dem Gehäuse (12) aufgenommenen Emissions-Einheit (24) umfasst.

7. Insektenabwehrvorrichtung nach zumindest einem der Ansprüche 2 bis 6, **dadurch gekennzeichnet, dass** das Gehäuse (12) eine ebene Montagefläche (16) ausbildet, die normal zu der Richtung ausgerichtet ist, in der das Gehäuse (12) eine Außenabmessung aufweist, die kleiner als die Falzluft (40) ist.

8. Insektenabwehrvorrichtung nach Anspruch 7,
**dadurch gekennzeichnet, dass**
von dem Gehäuse (12) zumindest ein mit der Montagefläche (16) flächenbündiger Befestigungsflansch (42) absteht, der eine Durchgangsöffnung zur Aufnahme einer Schraube (44) für die Befestigung des Gehäuses (12) an einem Blendrahmen (20) oder an einem Flügel (38) aufweist.

9. Zugangsvorrichtung für einen Raum in Form eines Fensters oder einer Tür, wobei in der Falzluft (40) der Zugangsvorrichtung oder an einem Blendrahmen der Zugangsvorrichtung zumindest eine Insektenabwehrvorrichtung (10) nach zumindest einem der vorstehenden Ansprüche befestigt ist.

10. Zugangsvorrichtung nach Anspruch 9,
**dadurch gekennzeichnet, dass**
das Betätigungselement (28) im in die Falzluft (40) eingebauten Zustand der Insektenabwehrvorrichtung (10) derart orientiert ist, dass der Flügel (38) der Zugangsvorrichtung das Betätigungselement (28) aus seiner zweiten Stellung in seine erste Stellung beim Schließen der Zugangsvorrichtung überführt.

11. Zugangsvorrichtung nach Anspruch 9 mit einer Insektenabwehrvorrichtung nach zumindest Anspruch 3,
**dadurch gekennzeichnet, dass**
das Betätigungselement (28) zur Aktivierung der Emissions-Einheit (24) im in die Falzluft (40) eingebauten Zustand der Insektenabwehrvorrichtung (10) derart orientiert ist, dass ein Federelement, durch das das Betätigungselement in Richtung seiner zweiten Stellung federvorgespannt ist, beim Öffnen der Zugangsvorrichtung entlastet wird.

## Claims

1. An insect repellent apparatus (10) comprising a housing (12) for receiving a sound and/or scent generating emission unit (24),
wherein the housing (12) is designed such that it fits into the rebate gap (40) of a closed window or a closed door,
**characterized in that**
the insect repellent apparatus (10) comprises an actuation element (28) for activating the emission unit (24), with the actuation element (28) being placed at the housing (12) and having a first position in which the insect repellent apparatus (10) does not emit emissions and a second position in which the insect repellent apparatus (10) emits emissions generated by the emission unit (24).

2. An insect repellent apparatus in accordance with claim 1,
**characterized in that**
the housing (12) has, viewed at least in one direction, an outer dimension which is smaller than the dimension of the rebate gap (40) between a frame (20) and a leaf (38) and which is in particular smaller than 12 mm, preferably smaller than 9 mm.

3. An insect repellent apparatus in accordance with claim 1,
**characterized in that**
the actuation element (28) is a pushbutton which is spring-preloaded in the direction of its second position and which in particular does not have a latch position.

4. An insect repellent apparatus in accordance with at least one of the preceding claims,
**characterized in that**
a closure apparatus, by which an emission opening (30) in the housing (12) can be selectively closed, is drive-effectively coupled to the actuation element (28).

5. An insect repellent apparatus in accordance with at least one of the preceding claims,
**characterized in that**
the housing (12) has an opening (26), in particular a closable opening (26), through which an emission unit (24) can be inserted into the housing (12).

6. An insect repellent apparatus in accordance with at least one of the preceding claims,
**characterized in that**
the insect repellent apparatus (10) comprises a battery, in particular a rechargeable battery, and/or a current connection (34) for applying current to an emission unit (24) received by the housing (12).

7. An insect repellent apparatus in accordance with at least one of the claims 2 to 6,
**characterized in that**
the housing (12) forms a planar installation surface (16) which is oriented normally to the direction in which the housing (12) has an outer dimension which is smaller than the rebate gap (40).

8. An insect repellent apparatus in accordance with claim 7, **characterized in that**
at least one fastening flange (42) in areal alignment with the installation surface (16) projects from the housing (12) and has a passage opening for receiving a screw (44) for the fastening of the housing (12) to a frame (20) or to a leaf (38).

9. An access apparatus for a space in the form of a window or a door, wherein at least one insect repellent apparatus (10) in accordance with at least one of the preceding claims is fastened in the rebate gap (40) of the access apparatus or to a frame of the access apparatus.

10. An access apparatus in accordance with claim 9,
**characterized in that**
the actuation element (28) is oriented in the state of the insect repellent apparatus (10) installed in the rebate gap (40) such that the leaf (38) of the access apparatus transfers the actuation element (28) from its second position into its first position on the closing of the access apparatus.

11. An access apparatus in accordance with claim 9 comprising an insect repellent apparatus in accordance with at least claim 3,
**characterized in that**
the actuation element (28) for activating the emission unit (24) is oriented in the state of the insect repellent apparatus (10) installed in the rebate gap (40) such that a spring element, by which the actuation element is spring-preloaded in the direction of its second position, is relieved on the opening of the access apparatus.

## Revendications

1. Dispositif pour repousser les insectes (10), comprenant un boîtier (12) destiné à recevoir une unité d'émission sonore et/ou odorante (24),
le boîtier (12) étant conçu de manière à s'adapter dans le jeu de feuillure (40) d'une fenêtre fermée ou d'une porte fermée ;
**caractérisé en ce que**
le dispositif pour repousser les insectes (10) comprend un élément d'actionnement (28) destiné à activer l'unité d'émission (24), l'élément d'actionnement (28) étant placé sur le boîtier (12) et présentant une première position dans laquelle le dispositif pour repousser les insectes (10) n'émet pas d'émissions, et une deuxième position dans laquelle le dispositif pour repousser les insectes (10) émet des émissions générées par l'unité d'émission (24).

2. Dispositif pour repousser les insectes selon la revendication 1, **caractérisé en ce que**
le boîtier (12) présente, vu dans au moins une direction, une dimension extérieure inférieure à la dimension du jeu de feuillure (40) entre un cadre dormant (20) et un vantail (38) et en particulier inférieure à 12 mm, de préférence inférieure à 9 mm.

3. Dispositif pour repousser les insectes selon la revendication 1, **caractérisé en ce que**
l'élément d'actionnement (28) est un bouton précontraint par ressort vers sa deuxième position, qui ne présente en particulier pas de position d'enclenchement.

4. Dispositif pour repousser les insectes selon l'une au moins des revendications précédentes,
**caractérisé en ce que**
un dispositif d'obturation est couplé en termes d'entraînement à l'élément d'actionnement (28), par lequel une ouverture d'émission (30) dans le boîtier (12) peut être obturée de manière sélective.

5. Dispositif pour repousser les insectes selon l'une au moins des revendications précédentes,
**caractérisé en ce que**
le boîtier (12) présente une ouverture (26), en particulier une ouverture obturable (26), à travers laquelle une unité d'émission (24) peut être introduite dans le boîtier (12).

6. Dispositif pour repousser les insectes selon l'une au moins des revendications précédentes,
**caractérisé en ce que**
le dispositif pour repousser les insectes (10) comprend une batterie, en particulier une batterie rechargeable, et/ou une prise de courant (34) pour alimenter une unité d'émission (24) reçue par le boîtier (12).

7. Dispositif pour repousser les insectes selon l'une au moins des revendications 2 à 6,
**caractérisé en ce que**
le boîtier (12) forme une surface de montage plane (16) orientée perpendiculairement à la direction dans laquelle le boîtier (12) présente une dimension extérieure inférieure au jeu de feuillure (40).

8. Dispositif pour repousser les insectes selon la revendication 7, **caractérisé en ce que**
au moins une bride de fixation (42) à fleur de la surface de montage (16) fait saillie du boîtier (12) et présente une ouverture traversante destinée à recevoir une vis (44) pour la fixation du boîtier (12) sur un cadre dormant (20) ou sur un vantail (38).

9. Dispositif d'accès à un local, se présentant sous la forme d'une fenêtre ou d'une porte,
dans lequel au moins un dispositif pour repousser les insectes (10) selon l'une au moins des revendications précédentes est fixé dans le jeu de feuillure (40) du dispositif d'accès ou sur un cadre dormant du dispositif d'accès.

10. Dispositif d'accès selon la revendication 9,
**caractérisé en ce que**
à l'état monté dans le jeu de feuillure (40) du dispositif pour repousser les insectes (10), l'élément d'actionnement (28) est orienté de telle sorte que le vantail (38) du dispositif d'accès fait passer l'élément d'actionnement (28) de sa deuxième position jusque dans sa première position, lors de la fermeture du dispositif d'accès.

11. Dispositif d'accès selon la revendication 9, comportant un dispositif pour repousser les insectes selon au moins la revendication 3,
**caractérisé en ce que**
l'élément d'actionnement (28) destiné à activer l'unité d'émission (24) est orienté, à l'état monté dans le jeu de feuillure (40) du dispositif pour repousser les insectes (10), de telle sorte qu'un élément de ressort, par lequel l'élément d'actionnement est précontraint par ressort vers sa deuxième position, est déchargé lors de l'ouverture du dispositif d'accès.
